# EUROPÄISCHE PATENTSCHRIFT

(11) **EP 3 264 714 B1**
(45) Veröffentlichungstag und Bekanntmachung des Hinweises auf die Patenterteilung: **26.08.2020**
(21) Anmeldenummer: 17174007.9
(22) Anmeldetag: 01.06.2017
(51) Int. Cl.: H04W 12/00, H04L 29/06

(54) **VERFAHREN ZUM BETREIBEN EINES SPRACHSTEUERUNGSSYSTEMS FÜR EINE AUTHENTIFIZIERTE SPRACHSTEUERUNG, HAUSHALTGERÄT, SPRACHSTEUERUNGSEINHEIT, VERWALTUNGSEINHEIT UND SPRACHSTEUERUNGSSYSTEM**
METHOD FOR OPERATING A VOICE CONTROL SYSTEM FOR AUTHENTICATED VOICE CONTROL, HOUSEHOLD APPLIANCE, VOICE CONTROL UNIT, MANAGEMENT UNIT AND VOICE CONTROL SYSTEM
PROCÉDÉ DE FONCTIONNEMENT D'UN SYSTÈME DE COMMANDE VOCALE POUR UNE COMMANDE VOCALE AUTHENTIFIÉE, APPAREIL MÉNAGER, UNITÉ DE COMMANDE VOCALE, UNITÉ DE GESTION ET SYSTÈME DE COMMANDE VOCALE

(30) Priorität: 01.07.2016 DE 102016112061
(43) Veröffentlichungstag der Anmeldung: 03.01.2018
(73) Patentinhaber: Miele & Cie. KG, 33332 Gütersloh (DE)
(72) Erfinder: Langhammer, Nils, 33415 Verl (DE)

(56) Entgegenhaltungen:
- EP-A1- 1 865 656
- DE-A1-102013 219 054
- US-A1- 2011 238 995
- Alfred Menezes ET AL: "HANDBOOK of APPLIED CRYPTOGRAPHY", Handbook of Applied Cryptography, 16. Oktober 1996 (1996-10-16), Seiten 1-794, XP055413926, ISBN: 978-1-4398-2191-6 Gefunden im Internet: URL:http://www.crcnetbase.com/doi/book/10. 1201/9781439821916 [gefunden am 2017-10-10]

## Beschreibung

Die Erfindung betrifft ein Verfahren zum Betreiben eines Sprachsteuerungssystems für eine authentifizierte Sprachsteuerung, ein Haushaltgerät für ein Sprachsteuerungssystem, eine Sprachsteuerungseinheit für ein Sprachsteuerungssystem, eine Verwaltungseinheit für ein Sprachsteuerungssystem, ein Sprachsteuerungssystem und ein Computer-Programmprodukt.

Eine Sprachsteuerung von Maschinen bzw. allgemein von Geräten kann in der Praxis dadurch realisiert sein, dass das zu steuernde Gerät über ein Mikrofon verfügt. Daher kann insbesondere eine räumliche Nähe zum Gerät, z. B. im Automobil-Bereich, sichergestellt werden, da beispielsweise ein Mikrofon über ein Kabel direkt mit einem zu steuernden Gerät verbunden sein kann.

Der Erfindung stellt sich die Aufgabe, ein verbessertes Verfahren zum Betreiben eines Sprachsteuerungssystems für eine authentifizierte Sprachsteuerung, ein verbessertes Haushaltgerät für ein Sprachsteuerungssystem, eine verbesserte Sprachsteuerungseinheit für ein Sprachsteuerungssystem, eine verbesserte Verwaltungseinheit für ein Sprachsteuerungssystem, ein verbessertes Sprachsteuerungssystem und ein verbessertes Computer-Programmprodukt zu schaffen.

Erfindungsgemäß wird diese Aufgabe durch ein Verfahren zum Betreiben eines Sprachsteuerungssystems für eine authentifizierte Sprachsteuerung, ein Haushaltgerät für ein Sprachsteuerungssystem, eine Sprachsteuerungseinheit für ein Sprachsteuerungssystem, eine Verwaltungseinheit für ein Sprachsteuerungssystem, ein Sprachsteuerungssystem und ein Computer-Programmprodukt mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere in einem sicheren Authentifizierungsablauf für eine Sprachsteuerung von Haushaltgeräten über eine Vernetzungsschnittstelle bzw. darin, dass mehrere Haushaltgeräte von einer zentralen Sprachsteuerungseinrichtung oder Sprachsteuerungseinheit gesteuert werden können. Beispielsweise brauchen für eine Sprachsteuerung somit keine Mikrofone in Haushaltgeräten verbaut werden, um eine räumliche Nähe zwischen Sprachsteuerungseinheit und Haushaltgeräten abzusichern. Daher können für die Sprachsteuerung Kosten pro Haushaltgerät eingespart werden, da hierfür kein eigenes Mikrofon pro Haushaltgerät benötigt wird. Auch brauchen nicht etwa wie bei Lösungen, die eine WLAN-Punkt-zu-Punkt- oder Bluetooth-Verbindung (WLAN = Wireless Local Area Network; drahtloses lokales Netzwerk) zur Sicherung räumlicher Nähe nutzen, die Haushaltgeräte für die Sprachsteuerung aus einem Heimbereich eines Kunden abgemeldet werden. Somit beispielsweise ist ein paralleler Betrieb von Sprachsteuerung und weiteren Vernetzungsfunktionen möglich. Es kann ferner insbesondere abgesichert werden, dass sich Sprachsteuerungseinheit und Haushaltgerät innerhalb des gleichen Raumes befinden. Hierbei kann eine Übermittlung von Sprachbefehlen beispielsweise abgesichert über ein Kundennetzwerk erfolgen, sodass weitere Vernetzungsfunktionen nicht beeinträchtigt werden.

US2011/0238995 A1 offenbart die sichere Authentifizierung von zwei Geräten, um Zugang zu einem Netzwerkdienst zu erlauben.

Die Erfindung wird durch die beigefügten Ansprüche bestimmt. Es wird ein Verfahren zum Betreiben eines Sprachsteuerungssystems für eine authentifizierte Sprachsteuerung vorgestellt, wobei das Sprachsteuerungssystem zumindest ein Haushaltgerät, eine Sprachsteuerungseinheit zum Durchführen der Sprachsteuerung des zumindest einen Haushaltgeräts und eine Verwaltungseinheit aufweist, wobei das zumindest eine Haushaltgerät, die Sprachsteuerungseinheit und die Verwaltungseinheit signalübertragungsfähig miteinander gekoppelt sind, wobei das Verfahren folgende Schritte aufweist:
Generieren eines Identifikationssignals, das eine zufällige Zeichenfolge repräsentiert, durch das Haushaltgerät ansprechend auf die Ausführung einer Funktion durch Betätigung einer lokalen Bedienaktion am Haushaltsgerät, z.B. ein Einschalten des Haushaltgeräts;
Senden des Identifikationssignals von dem Haushaltgerät als erstes Identifikationssignal mit einer ersten Sendeeigenschaft an die Verwaltungseinheit und als zweites Identifikationssignal mit einer von der ersten Sendeeigenschaft unterschiedlichen, zweiten Sendeeigenschaft an die Sprachsteuerungseinheit;
Empfangen des zweiten Identifikationssignals von dem Haushaltgerät durch die Sprachsteuerungseinheit;
Weiterleiten des zweiten Identifikationssignals von der Sprachsteuerungseinheit an die Verwaltungseinheit;
Einlesen des ersten Identifikationssignals von dem Haushaltgerät und des zweiten Identifikationssignals von der Sprachsteuerungseinheit durch die Verwaltungseinheit; Überprüfen des ersten Identifikationssignals und des zweiten Identifikationssignals auf Übereinstimmung durch die Verwaltungseinheit;
Ausgeben eines Schlüsselsignals, das einen digitalen Schlüssel für Sprachsteuerungsbefehle der Sprachsteuerungseinheit an das Haushaltgerät repräsentiert, abhängig von der Übereinstimmung von der Verwaltungseinheit als ein erstes Schlüsselsignal an die Sprachsteuerungseinheit und als ein zweites Schlüsselsignal an das Haushaltgerät;
Speichern des von der Verwaltungseinheit ausgegebenen ersten Schlüsselsignals in der Sprachsteuerungseinheit; und
Sichern des von der Verwaltungseinheit ausgegebenen zweiten Schlüsselsignals in dem Haushaltgerät.

Die Schritte des Generierens, der Schritt des Sendens, der Schritt des Empfangens, der Schritt des Weiterleitens, der Schritt des Einlesens, der Schritt des Überprüfens, der Schritt des Ausgebens, der Schritt des Speicherns und der Schritt des Sicherns sind ansprechend auf die Ausführung einer Funktion durch Betätigung einer lokalen Bedienaktion am Haushaltsgerät, beispielsweise ein Einschalten des Haushaltgeräts durch einen Benutzer ausführbar. Dabei kann unter Einschalten auch eine Inbetriebnahme oder eine Installation des Haushaltgerätes verstanden werden. Ferner können die genannten Schritte auch ansprechend auf eine Inbetriebnahme oder eine Installation der Sprachsteuerungseinheit durchgeführt werden. Die genannten Schritte können nach dem Einschalten zur Generierung digitaler Schlüssel ausgeführt werden. Die Schlüssel können nachfolgend für eine abgesicherte Sprachsteuerung des Haushaltgeräts verwendet werden.

Die Betätigung einer lokalen Bedienaktion am Haushaltsgerät kann außer dem Einschalten alternativ oder auch zusätzlich eine andere Bedienaktion sein. Mit anderen Worten, die vorstehend genannten Schritte können ansprechend auf Bedienaktionen wie z.B. spezielle Tasten (-Kombinationen) oder Menüpunkte in der Bedienoberfläche ausgelöst werden.

Die zufällige Zeichenfolge des im Schritt des Generierens generierten Identifikationssignals kann eine pseudozufällige Zeichenfolge, insbesondere eine pseudozufällige Zahlenfolge sein.

Für eine Sprachsteuerung kann das Verfahren einen Schritt des Erzeugens eines Befehlssignals mit einer Signatur unter Verwendung des digitalen Schlüssels des ersten Schlüsselsignals ansprechend auf einen erkannten Sprachbefehl durch die Sprachsteuerungseinheit umfassen. Dabei kann das Befehlssignal den Sprachbefehl repräsentieren. Ferner kann das Verfahren einen Schritt des Übertragens des Befehlssignals von der Sprachsteuerungseinheit an das Haushaltgerät und einen Schritt des Aufnehmens des Befehlssignals von der Sprachsteuerungseinheit durch das Haushaltgerät umfassen. Ferner kann das Verfahren einen Schritt des Bereitstellens eines Ansteuersignals zum Ausführen des Sprachbefehls des Befehlssignals abhängig von einer Prüfung der Signatur des Befehlssignals unter Verwendung des digitalen Schlüssels des zweiten Schlüsselsignals durch das Haushaltgerät umfassen. Die Schritte des Erzeugens, des Übertragens, des Aufnehmens und des Bereitstellens sind ansprechend auf einen Sprachbefehl eines Nutzers ausführbar. Abhängig von der Prüfung der Signatur des Befehlssignals unter Verwendung des digitalen Schlüssels des zweiten Schlüsselsignals durch das Haushaltgerät kann der Schritt des Bereitstellens oder ein Schritt des Verwerfens des Befehlssignals ausgeführt werden.

Gemäß einer Ausführungsform kann im Schritt des Sendens die erste Sendeeigenschaft eine erste Sendeleistung und die zweite Sendeeigenschaft eine zweite Sendeleistung repräsentieren. Dabei kann die zweite Sendeleistung geringer als die erste Sendeleistung sein. Durch eine geringe zweite Sendeleistung kann gewährleistet werden, dass das zweite Identifikationssignal nur dann von der Sprachsteuerungseinheit empfangen werden kann, wenn sich die Sprachsteuerungseinheit in der Nähe des Haushaltgeräts befindet.

Beispielsweise kann die erste Sendeleistung groß genug sein, um dem ersten Identifikationssignal ein Durchdringen einer Hauswand zu ermöglichen. Andererseits kann die zweite Sendeleistung klein genug sein, um das zweite Identifikationssignal an dem Durchdringen der Hauswand zu hindern. Auf diese Weise kann sichergestellt werden, dass das zweite Identifikationssignal nur dann von der Sprachsteuerungseinheit empfangen werden kann, wenn sich die Sprachsteuerungseinheit in demselben Raum wie das Haushaltgerät befindet.

Der Schritt des Sendens kann in Abhängigkeit von einem Messwert durchgeführt werden, der einen Vergleich einer Empfangsleistung eines Zugriffspunktes eines Drahtlosnetzwerks durch das Haushaltgerät und durch die Sprachsteuerungseinheit repräsentiert. Hierbei können das Haushaltgerät und die Sprachsteuerungseinheit an dem Zugriffspunkt angemeldet sein. Eine solche Ausführungsform bietet den Vorteil, dass bei der Durchführung des Verfahrens sicher und zuverlässig sowie an eine Geometrie eines Zimmers angepasst festgestellt werden kann, dass die Sprachsteuerungseinheit und das betreffende Haushaltgerät oder die betreffenden Haushaltgeräte in demselben Zimmer angeordnet sind.

Gemäß einer Ausführungsform kann die zweite Sendeeigenschaft das Senden des zweiten Identifikationssignals in den Schichten 1 oder 2 gemäß dem Open Systems Interconnection Model für Netzwerkprotokolle bewirken. Auf diese Weise kann die Weiterleitung des zweiten Identifikationssignals durch einen Repeater unterbunden werden.

Gemäß einer Ausführungsform kann die erste Sendeeigenschaft das Senden des ersten Identifikationssignals mit einer ersten Basic Service Set Identification bewirken, die einem Zugriffspunkt zugeordnet ist, an dem das Haushaltgerät und die Sprachsteuerungseinheit angemeldet sind. Demgegenüber kann die zweite Sendeeigenschaft das Senden des zweiten Identifikationssignals mit einer zweiten Basic Service Set Identification bewirken, die sich von der ersten Basic Service Set Identification unterscheidet. Auf diese Weise kann ein Empfang des zweiten Identifikationssignals durch den Zugriffspunkt verhindert werden.

Ferner kann im Schritt des Sendens das erste Identifikationssignal über einen sicheren Kanal gesendet werden. Zudem kann im Schritt des Weiterleitens das zweite Identifikationssignal über einen sicheren Kanal weitergeleitet werden. Auch können im Schritt des Ausgebens das erste Schlüsselsignal und das zweite Schlüsselsignal über sichere Kanäle ausgegeben werden. Hierbei kann ein sicherer Kanal eine Signalübermittlung in Schicht 5 oder höher gemäß dem Open Systems Interconnection Model für Netzwerkprotokolle repräsentieren, insbesondere mittels Transport Layer Security 1.2 oder dergleichen. Eine solche Ausführungsform bietet den Vorteil, dass eine Signalübertragung sicher und vertrauenswürdig erfolgen kann und ein Schutz vor unbefugtem Zugriff minimiert werden kann.

Zudem kann im Schritt des Überprüfens die Identität des Haushaltgerätes und zusätzlich oder alternativ der Sprachsteuerungseinheit unter Verwendung des ersten Identifikationssignals und zusätzlich oder alternativ des zweiten Identifikationssignals durch die Verwaltungseinheit überprüft werden. Eine solche Ausführungsform bietet den Vorteil, dass eine sichere und authentifizierte bzw. autorisierte Sprachsteuerung unter Verwendung vertrauenswürdiger Geräte ermöglicht werden kann.

Es wird auch ein Haushaltgerät für ein Sprachsteuerungssystem vorgestellt, wobei das Sprachsteuerungssystem zumindest ein Haushaltgerät, eine Sprachsteuerungseinheit zum Durchführen der Sprachsteuerung des zumindest einen Haushaltgerätes und eine Verwaltungseinheit aufweist, wobei das zumindest eine Haushaltgerät, die Sprachsteuerungseinheit und die Verwaltungseinheit signalübertragungsfähig miteinander koppelbar oder gekoppelt sind, wobei das Haushaltgerät ausgebildet ist, um den Schritt des Generierens, den Schritt des Sendens, den Schritt des Sicherns, den Schritt des Aufnehmens und den Schritt des Bereitstellens einer Ausführungsform des vorstehend genannten Verfahrens zum Betreiben auszuführen. Ein Haushaltgerät kann beispielsweise ein Gerät zum Zubereiten von Speisen oder ein Reinigungsgerät darstellen. Das Sprachsteuerungssystem kann das Haushaltgerät und optional zumindest ein weiteres Haushaltgerät aufweisen. Das Haushaltgerät kann ausgebildet sein, um den Schritt des Generierens, den Schritt des Sendens, den Schritt des Sicherns, den Schritt des Aufnehmens und den Schritt des Bereitstellens in geeigneten Einrichtungen auszuführen.

Es wird ferner eine Sprachsteuerungseinheit für ein Sprachsteuerungssystem vorgestellt, wobei das Sprachsteuerungssystem zumindest ein Haushaltgerät, die Sprachsteuerungseinheit zum Durchführen der Sprachsteuerung des zumindest einen Haushaltgerätes und eine Verwaltungseinheit aufweist, wobei das zumindest eine Haushaltgerät, die Sprachsteuerungseinheit und die Verwaltungseinheit signalübertragungsfähig miteinander koppelbar oder gekoppelt sind, wobei die Sprachsteuerungseinheit ausgebildet ist, um den Schritt des Empfangens, den Schritt des Weiterleitens, den Schritt des Speicherns, den Schritt des Erzeugens und den Schritt des Übertragens einer Ausführungsform des vorstehend genannten Verfahrens zum Betreiben auszuführen. Die Sprachsteuerungseinheit kann ausgebildet sein, um den Schritt des Empfangens, den Schritt des Weiterleitens, den Schritt des Speicherns, den Schritt des Erzeugens und den Schritt des Übertragens in geeigneten Einrichtungen auszuführen. Die Sprachsteuerungseinheit kann ein Mikrofon zum Erfassen eines akustisch übertragenen Sprachbefehls aufweisen.

Es wird zudem eine Verwaltungseinheit für ein Sprachsteuerungssystem vorgestellt, wobei das Sprachsteuerungssystem zumindest ein Haushaltgerät, eine Sprachsteuerungseinheit zum Durchführen der Sprachsteuerung des zumindest einen Haushaltgerätes und die Verwaltungseinheit aufweist, wobei das zumindest eine Haushaltgerät, die Sprachsteuerungseinheit und die Verwaltungseinheit signalübertragungsfähig miteinander koppelbar oder gekoppelt sind, wobei die Verwaltungseinheit ausgebildet ist, um den Schritt des Einlesens, den Schritt des Überprüfens und den Schritt des Ausgebens einer Ausführungsform des vorstehend genannten Verfahrens zum Betreiben auszuführen. Die Verwaltungseinheit kann ausgebildet sein, um den Schritt des Einlesens, den Schritt des Überprüfens und den Schritt des Ausgebens in geeigneten Einrichtungen auszuführen.

Die genannten Einheiten sowie das Haushaltgerät können somit jeweils geeignete Einrichtungen aufweisen, die ausgebildet sind, um die entsprechenden Verfahrensschritte umzusetzen. Eine solche Einrichtung kann beispielsweise zumindest eine elektrische Schaltung und/oder zumindest eine Antenne zur Signalübertragung umfassen. Mehrere Einrichtungen innerhalb des Haushaltgeräts oder einer Einheit können über Schnittstellen miteinander verbunden sein.

Außerdem wird ein Sprachsteuerungssystem für eine authentifizierte Sprachsteuerung vorgestellt, wobei das Sprachsteuerungssystem folgende Merkmale aufweist:
zumindest ein Exemplar einer Ausführungsform des vorstehend genannten Haushaltgeräts;
eine Ausführungsform der vorstehend genannten Sprachsteuerungseinheit, wobei die Sprachsteuerungseinheit ausgebildet ist, um die Sprachsteuerung des zumindest einen Haushaltgerätes durchzuführen; und
eine Ausführungsform der vorstehend genannten Verwaltungseinheit, wobei das zumindest eine Haushaltgerät, die Sprachsteuerungseinheit und die Verwaltungseinheit signalübertragungsfähig miteinander koppelbar oder gekoppelt sind.

Somit können zumindest ein Exemplar einer Ausführungsform des vorstehend genannten Haushaltgeräts, eine Ausführungsform der vorstehend genannten Sprachsteuerungseinheit und eine Ausführungsform der vorstehend genannten Verwaltungseinheit in Verbindung mit dem Sprachsteuerungssystem vorteilhaft eingesetzt bzw. verwendet werden.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Sprachsteuerungssystems für eine authentifizierte Sprachsteuerung gemäß einem Ausführungsbeispiel der Erfindung; und
- Figur 2: ein Ablaufdiagramm eines Verfahrens zum Betreiben gemäß einem Ausführungsbeispiel der Erfindung.

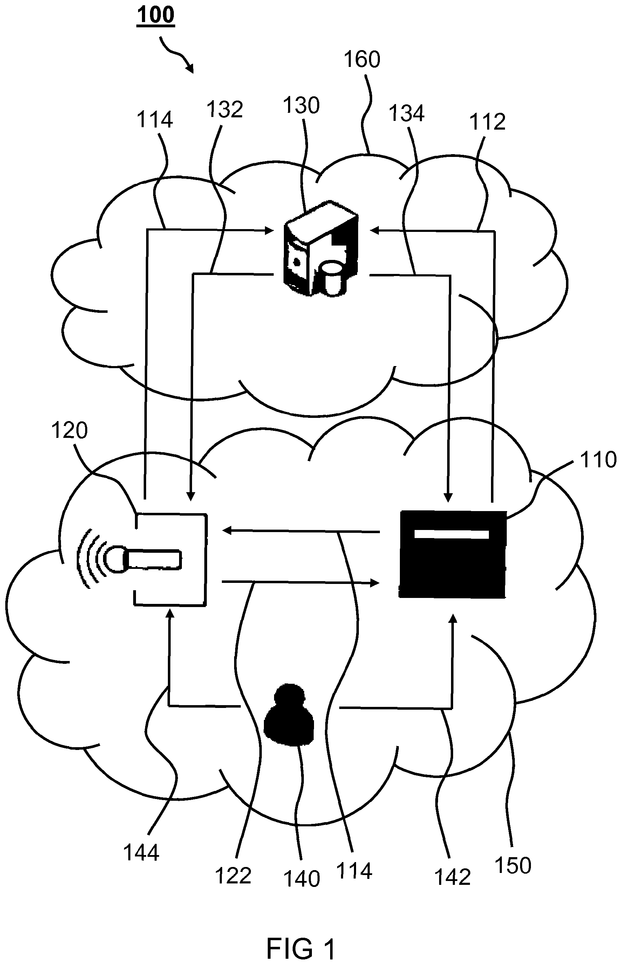

Figur 1 zeigt eine schematische Darstellung eines Sprachsteuerungssystems 100 für eine authentifizierte Sprachsteuerung gemäß einem Ausführungsbeispiel der Erfindung. Insbesondere ist das Sprachsteuerungssystem 100 ausgebildet, um eine authentifizierte Sprachsteuerung für zumindest ein Haushaltgerät 110 zu ermöglichen. Das Sprachsteuerungssystem 100 weist zumindest ein Haushaltgerät 110, eine Sprachsteuerungseinheit 120 und eine Verwaltungseinheit 130 auf. Das zumindest eine Haushaltgerät 110, die Sprachsteuerungseinheit 120 und die Verwaltungseinheit 130 sind signalübertragungsfähig miteinander gekoppelt. Die Sprachsteuerungseinheit 120 ist ausgebildet, um die Sprachsteuerung des zumindest einen Haushaltgerätes 110 durchzuführen.

Gemäß dem in Figur 1 dargestellten Ausführungsbeispiel der Erfindung weist das Sprachsteuerungssystem 100 beispielhaft lediglich ein Haushaltgerät 110, eine Sprachsteuerungseinheit 120 und eine Verwaltungseinheit 130 auf. Hierbei ist das Haushaltgerät 110 lediglich beispielhaft als ein Backofen ausgeführt. Ferner ist in Figur 1 ein Nutzer oder Kunde 140 dargestellt, der mit dem Haushaltgerät 110 und der Sprachsteuerungseinheit 120 direkt und mit der Verwaltungseinheit 130 indirekt interagieren kann. Dabei sind das Haushaltgerät 110 und die Sprachsteuerungseinheit 120 in einem Heimbereich bzw. einer Heimumgebung 150 des Nutzers 140 angeordnet, wobei die Verwaltungseinheit 130 beispielsweise zumindest einen Server im Internet 160 repräsentiert.

Das Haushaltgerät 110 ist durch den Nutzer 140 einschaltbar. Ansprechend auf ein Einschalten des Haushaltgeräts 110 durch den Nutzer 140, wobei das Einschalten durch ein Einschaltsignal 142 repräsentiert ist, ist das Haushaltgerät 110 ausgebildet, um ein Identifikationssignal zu generieren. Das Identifikationssignal repräsentiert hierbei eine zufällige oder pseudozufällige Zeichenfolge, beispielsweise eine pseudozufällige Zahlenfolge, zum Identifizieren des Haushaltgeräts 110. Ferner ist das Haushaltgerät 110 ausgebildet, um das Identifikationssignal als erstes Identifikationssignal 112 an die Verwaltungseinheit 130 und als zweites Identifikationssignal 114 an die Sprachsteuerungseinheit 120 zu senden. Dabei ist das Haushaltgerät 110 ausgebildet, um das erste Identifikationssignal 112 mit einer ersten Sendeeigenschaft und das zweite Identifikationssignal 114 mit einer von der ersten Sendeeigenschaft unterschiedlichen, zweiten Sendeeigenschaft zu senden. Die zweite Sendeeigenschaft ist ausgebildet oder konfiguriert, um ein Senden des zweiten Identifikationssignals 114 direkt an die Sprachsteuerungseinheit 120 zu bewirken. Dabei weist die zweite Sendeeigenschaft gemäß einem Ausführungsbeispiel eine Sendeleistung auf, die einen Empfang des zweiten Identifikationssignals 114 seitens der Sprachsteuerungseinheit 120 lediglich innerhalb jenes Zimmers ermöglicht, in welchem das Haushaltgerät 110 angeordnet ist.

Die Sprachsteuerungseinheit 120 ist ausgebildet, um das zweite Identifikationssignal 114 von dem Haushaltgerät 110 zu empfangen. Ferner ist die Sprachsteuerungseinheit 120 ausgebildet, um das zweite Identifikationssignal 114 an die Verwaltungseinheit 130 weiterzuleiten. Somit ist die Sprachsteuerungseinheit 120 ausgebildet, um das zuvor von dem Haushaltgerät 110 empfangene zweite Identifikationssignal 114 an die Verwaltungseinheit 130 weiterzuleiten.

Die Verwaltungseinheit 130 ist ausgebildet, um sowohl das erste Identifikationssignal 112, das von dem Haushaltgerät 110 an die Verwaltungseinheit 130 gesendet wurde, als auch das zweite Identifikationssignal 114, das von dem Haushaltgerät 110 über die Sprachsteuerungseinheit 120 an die Verwaltungseinheit 130 gesendet wurde, einzulesen. Ferner ist die Verwaltungseinheit 130 ausgebildet, um die eingelesenen Identifikationssignale 112 und 114 auf gegenseitige Übereinstimmung zu überprüfen. Auch ist die Verwaltungseinheit 130 ausgebildet, um abhängig von der überprüften Übereinstimmung ein Schlüsselsignal auszugeben. Das Schlüsselsignal repräsentiert einen digitalen Schlüssel für Sprachsteuerungsbefehle der Sprachsteuerungseinheit 120 an das Haushaltgerät 110. Dabei ist die Verwaltungseinheit 130 ausgebildet, um das Schlüsselsignal als ein erstes Schlüsselsignal 132 an die Sprachsteuerungseinheit 120 und als ein zweites Schlüsselsignal 134 an das Haushaltgerät 110 auszugeben. Anders ausgedrückt ist die Verwaltungseinheit 130 ausgebildet, um die Schlüsselsignale 132 und 134 bei einer Übereinstimmung der Identifikationssignale 112 und 114 bzw. nach erfolgreicher Authentifizierung auszugeben.

Die Sprachsteuerungseinheit 120 ist ausgebildet, um das erste Schlüsselsignal 132, das von der Verwaltungseinheit 130 ausgegeben wurde, zu speichern. Auch ist das Haushaltgerät 110 ausgebildet, um das zweite Schlüsselsignal 134, das von der Verwaltungseinheit 130 ausgegeben wurde, zu sichern. Somit ist eine authentifizierte Sprachsteuerung des Haushaltgeräts 110 und optional weiterer Haushaltgeräte mittels der Sprachsteuerungseinheit 120 vorbereitet bzw. ermöglicht.

Ein Sprachsignal 144, das zumindest einen Sprachbefehl aufweist, ist von dem Nutzer 140 zum Einleiten der Sprachsteuerung an die Sprachsteuerungseinheit 120 richtbar. Die Sprachsteuerungseinheit 120 ist ausgebildet, um ansprechend auf einen erkannten Sprachbefehl bzw. ansprechend auf das Sprachsignal 144 und unter Verwendung des digitalen Schlüssels des ersten Schlüsselsignals 132 ein Befehlssignal 122 mit einer Signatur zu erzeugen. Das Befehlssignal 122 repräsentiert den Sprachbefehl des Nutzers 140. Ferner ist die Sprachsteuerungseinheit 120 ausgebildet, um das Befehlssignal 122 an das Haushaltgerät 110 zu übertragen. Anders ausgedrückt ist die Sprachsteuerungseinheit 120 ausgebildet, um das Befehlssignal 122 mit dem digitalen Schlüssel des ersten Schlüsselsignals 132 zu signieren.

Das Haushaltgerät 110 ist ausgebildet, um das Befehlssignal 122 von der Sprachsteuerungseinheit 120 aufzunehmen. Ferner ist das Haushaltgerät 110 ausgebildet, um eine Prüfung der Signatur des Befehlssignals 122 unter Verwendung des digitalen Schlüssels des zweiten Schlüsselsignals 134 durchzuführen. Das Haushaltgerät 110 ist ausgebildet, um abhängig von der Prüfung bzw. einem Ergebnis der Prüfung der Signatur des Befehlssignals 122 ein Ansteuersignal zum Ausführen des Sprachbefehls des Befehlssignals 122 bereitzustellen. Anders ausgedrückt ist das Haushaltgerät 110 ausgebildet, um eine Ausführung des Sprachbefehls des Befehlssignals 122 einzuleiten bzw. zu bewirken, wenn die Prüfung ergeben hat, dass der digitale Schlüssel des ersten Schlüsselsignals 132 und der digitale Schlüssel des zweiten Schlüsselsignals 134 korrekt sind.

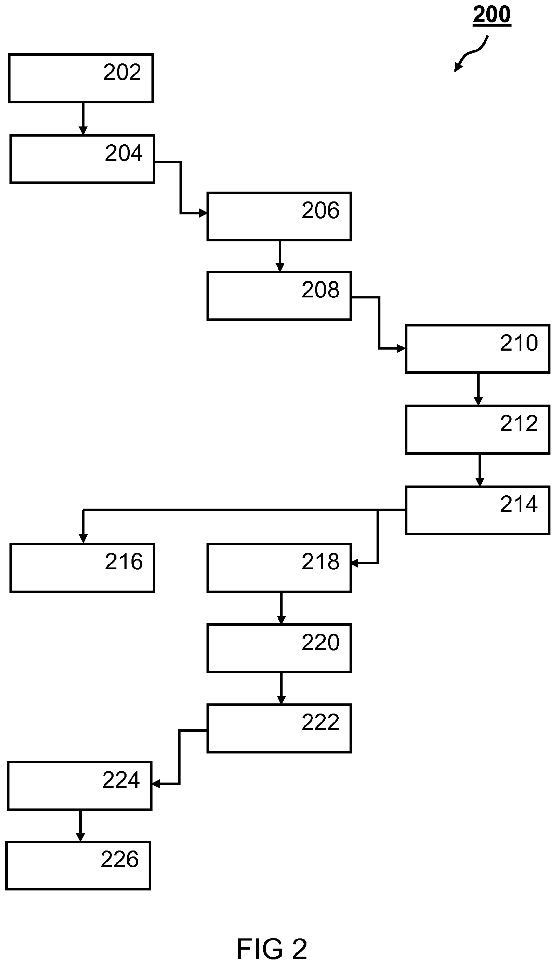

Figur 2 zeigt ein Ablaufdiagramm eines Verfahrens 200 zum Betreiben gemäß einem Ausführungsbeispiel der Erfindung. Das Verfahren 200 ist ausführbar, um ein Sprachsteuerungssystem für eine authentifizierte Sprachsteuerung zu betreiben. Dabei ist das Verfahren 200 zum Betreiben unter Verwendung von bzw. in Verbindung mit dem Sprachsteuerungssystem aus Figur 1 oder einem ähnlichen Sprachsteuerungssystem ausführbar. Anders ausgedrückt ist das Verfahren 200 ausführbar, um das Sprachsteuerungssystem aus Figur 1 oder ein ähnliches Sprachsteuerungssystem zu betreiben.

Das Verfahren 200 zum Betreiben weist einen Schritt 202 des Generierens eines Identifikationssignals, das eine zufällige Zeichenfolge repräsentiert, durch ein Haushaltgerät, ansprechend auf ein Einschalten des Haushaltgeräts auf. Nachfolgend wird in einem Schritt 204 des Sendens das Identifikationssignal von dem Haushaltgerät als erstes Identifikationssignal mit einer ersten Sendeeigenschaft an die Verwaltungseinheit und als zweites Identifikationssignal mit einer von der ersten Sendeeigenschaft unterschiedlichen, zweiten Sendeeigenschaft an die Sprachsteuerungseinheit gesendet.

Danach wird in einem Schritt 206 des Empfangens das zweite Identifikationssignal von dem Haushaltgerät durch die Sprachsteuerungseinheit empfangen. Dann wird in einem Schritt 208 des Weiterleitens das zweite Identifikationssignal von der Sprachsteuerungseinheit an die Verwaltungseinheit weitergeleitet.

In einem nachfolgenden Schritt 210 des Einlesens werden das erste Identifikationssignal von dem Haushaltgerät und das zweite Identifikationssignal von der Sprachsteuerungseinheit durch die Verwaltungseinheit eingelesen. Danach werden in einem Schritt 212 des Überprüfens das erste Identifikationssignal und das zweite Identifikationssignal durch die Verwaltungseinheit auf Übereinstimmung überprüft. Abhängig von der Übereinstimmung wird in einem nachfolgenden Schritt 214 des Ausgebens ein Schlüsselsignal als ein erstes Schlüsselsignal an die Sprachsteuerungseinheit und als ein zweites Schlüsselsignal an das Haushaltgerät ausgegeben. Das Schlüsselsignal repräsentiert hierbei einen digitalen Schlüssel für Sprachsteuerungsbefehle der Sprachsteuerungseinheit an das Haushaltgerät.

Dann wird in einem Schritt 216 des Sicherns das von der Verwaltungseinheit ausgegebene zweite Schlüsselsignal in dem Haushaltgerät gesichert und wird in einem Schritt 218 des Speicherns das von der Verwaltungseinheit ausgegebene erste Schlüsselsignal in der Sprachsteuerungseinheit gespeichert.

Nachfolgend wird ansprechend auf einen erkannten Sprachbefehl in einem Schritt 220 des Erzeugens unter Verwendung des digitalen Schlüssels des ersten Schlüsselsignals durch die Sprachsteuerungseinheit ein Befehlssignal mit einer Signatur erzeugt. Das Befehlssignal repräsentiert hierbei den Sprachbefehl. Dann wird in einem Schritt 222 des Übertragens das erzeugte Befehlssignal von der Sprachsteuerungseinheit an das Haushaltgerät übertragen. Danach wird in einem Schritt 224 des Aufnehmens das von der Sprachsteuerungseinheit übertragene Befehlssignal durch das Haushaltgerät aufgenommen. Schließlich wird in einem Schritt 226 des Bereitstellens abhängig von einer Prüfung der Signatur des Befehlssignals unter Verwendung des digitalen Schlüssels des zweiten Schlüsselsignals durch das Haushaltgerät ein Ansteuersignal zum Ausführen des Sprachbefehls des Befehlssignals bereitgestellt.

Hierbei sind der Schritt 202 des Generierens, der Schritt 204 des Sendens, der Schritt 216 des Sicherns, der Schritt 224 des Aufnehmens und der Schritt 226 des Bereitstellens mittels des Haushaltgeräts des Sprachsteuerungssystems aus Figur 1 oder eines ähnlichen Haushaltgeräts ausführbar. Der Schritt 206 des Empfangens, der Schritt 208 des Weiterleitens, der Schritt 218 des Speicherns, der Schritt 220 des Erzeugens und der Schritt 222 des Übertragens sind mittels der Sprachsteuerungseinheit des Sprachsteuerungssystems aus Figur 1 oder einer ähnlichen Sprachsteuerungseinheit ausführbar. Der Schritt 210 des Einlesens, der Schritt 212 des Überprüfens und der Schritt 214 des Ausgebens sind mittels der Verwaltungseinheit des Sprachsteuerungssystems aus Figur 1 oder einer ähnlichen Verwaltungseinheit ausführbar.

Gemäß einem Ausführungsbeispiel weist im Schritt 204 des Sendens die zweite Sendeeigenschaft eine Sendeleistung, die geringer ist als eine Sendeleistung der ersten Sendeeigenschaft, eine eigene Basic Service Set Identification (BSSID) oder andere Basic Service Set Identification als bei der ersten Sendeeigenschaft und/oder eine Signalübermittlung in Schicht 2 gemäß dem Open Systems Interconnection Model (OSI-Modell) für Netzwerkprotokolle auf. Alternativ wäre auch die Verwendung einer Schicht 1 Nachricht möglich. Zusätzlich oder alternativ ist oder wird im Schritt 204 des Sendens eine Sendeleistung als zweite Sendeeigenschaft auf einen Vorgabewert oder in Abhängigkeit von einem Messwert eingestellt. Hierbei repräsentiert der Messwert einen Vergleich einer Empfangsleistung eines Zugriffspunktes eines Drahtlosnetzwerks durch das Haushaltgerät und die Sprachsteuerungseinheit, wobei bzw. während das Haushaltgerät und die Sprachsteuerungseinheit an dem Zugriffspunkt angemeldet sind.

Gemäß einem weiteren Ausführungsbeispiel wird im Schritt 204 des Sendens das erste Identifikationssignal über einen sicheren Kanal gesendet, wird im Schritt 208 des Weiterleitens das zweite Identifikationssignal über einen sicheren Kanal weitergeleitet und/oder werden im Schritt 214 des Ausgebens das erste Schlüsselsignal und das zweite Schlüsselsignal über sichere Kanäle ausgegeben. Ein sicherer Kanal repräsentiert hierbei eine Signalübermittlung in Schicht 5 oder höher gemäß dem OSI-Modell für Netzwerkprotokolle, insbesondere mittels Transport Layer Security 1.2 (TLS 1.2) oder dergleichen.

Ferner wird gemäß einem Ausführungsbeispiel im Schritt 212 des Überprüfens die Identität die Identität des Haushaltgerätes und/oder der Sprachsteuerungseinheit unter Verwendung des ersten Identifikationssignals und/oder des zweiten Identifikationssignals durch die Verwaltungseinheit überprüft.

Unter Bezugnahme auf die Figuren 1 bis 2 werden nachfolgend Ausführungsbeispiele der Erfindung, weitere Ausführungsbeispiele und/oder Hintergründe von Ausführungsbeispielen der Erfindung zusammenfassend und/oder mit anderen Worten erläutert.

Für Haushaltgeräte 110 kann eine Sprachsteuerung realisiert werden. Diese Sprachsteuerung erfolgt über eine zusätzliche Hardware-Einheit, die Sprachsteuerungseinheit 120, auch als Sprachsteuerungsbox bezeichnet, die beispielsweise in einer Küche platziert sein oder werden kann. Die Sprachsteuerungseinheit 120 weist beispielsweise zumindest ein Mikrofon und eine Kamera auf und ist ausgebildet, um Sprachbefehle von einem Nutzer 140 bzw. Kunden 140 zu erkennen.

Nach erfolgreicher Erkennung des Sprachbefehls wird dieser Befehl an ein Haushaltgerät 110 im gleichen Raum geschickt. Hierfür wird insbesondere eine Standard-Vernetzungsschnittstelle auf WLAN-Basis (WLAN = Wireless Local Area Network; drahtloses lokales Netzwerk) verwendet, die auch für eine Kommunikation des Haushaltgeräts 110 mit beispielsweise einer Smartphone-App und für eine Kommunikation zwischen verschiedenen Geräten genutzt wird.

Die Kommunikation zwischen Sprachsteuerungseinheit 120 und Haushaltgerät 110 erfolgt dabei innerhalb eines Heimnetzes des Kunden 140 bzw. innerhalb dessen IP-basierter (IP = Internet Protocol) Infrastruktur. Eine räumliche Ausdehnung einer IP-Infrastruktur des Kunden 140 ist nicht bekannt und unterscheidet sich beispielsweise bei jedem Kunden 140.

Insbesondere soll über die Sprachsteuerung das Haushaltgerät 110 in Betrieb genommen werden, z. B. Starten eines Backofens. Dies ist grundsätzlich nur dann erlaubt, wenn sich der Kunde 140 vor Ort befindet bzw. diese Aktion durch ihn vor Ort autorisiert wurde. Die Sprachsteuerungseinheit 120 weist hierfür beispielsweise eine Kamera und mehrere Mikrofone auf. Mittels dieser Kombination kann detektiert werden, ob sich der Kunde 140 in der Nähe der Sprachsteuerungseinheit 120 befindet. Da der eigentliche Sprachbefehl jedoch über die allgemeine Vernetzungsschnittstelle zwischen Sprachsteuerungseinheit 120 und Haushaltgerät 110 ausgetauscht wird, kann gemäß Ausführungsbeispielen der Erfindung insbesondere abgesichert werden, dass sich die Sprachsteuerungseinheit 120 und das Haushaltgerät 110 innerhalb des gleichen Raumes befinden. Die Kommunikation erfolgt über das Kundennetzwerk. Hierbei kann verhindert werden, dass der Kunde 140 die Sprachsteuerungseinheit 120 irgendwo anders als in dem gleichen Raum wie das Haushaltgerät 110 platzieren könnte und aus der Ferne solche Befehle ausführen könnte. Anders ausgedrückt kann sichergestellt werden, dass das Haushaltgerät 110 nur dann einen Befehl ausführt, wenn sich die Sprachsteuerungseinheit 120 und das Haushaltgerät 110 innerhalb des gleichen Raumes bzw. Zimmers befinden. Hierbei kann insbesondere auch eine Manipulationsmöglichkeit durch Dritte (Hacker) minimiert oder ausgeschlossen werden.

Anders als bei einer Sprachsteuerung, bei der die Steuerung bestimmter Funktionen beispielsweise über ein Smartphone mit Spracherkennung erfolgt bzw. die Kommunikation beispielsweise über eine lokal begrenzte Bluetooth-Funkverbindung oder aber durch eine WLAN-Punkt-zu-Punkt-Verbindung erfolgt, kann gemäß Ausführungsbeispielen der Erfindung insbesondere eine Übertragung von Steuerbefehlen über das Kundennetzwerk erfolgen.

Möchte der Kunde 140 das Haushaltgerät 110 per Sprache bedienen, so schaltet er es zunächst ein. Beim Einschalten wird vom Haushaltgerät 110 das zweite Identifizierungssignal 114 beispielsweise als ein WLAN-Paket mit reduzierter Sendeleistung geschickt. Dieses WLAN-Paket ist ein einfaches Layer-2-Paket (MAC-Frame) ohne IP bzw. höhere Protokolle. Es wird auch nicht zum WLAN-Access-Point bzw. Router geschickt.

Das zweite Identifizierungssignal 114 repräsentiert, wie das erste Identifizierungssignal 112, beispielsweise eine zufällige oder pseudozufällige Zahlenfolge, und die Sendeleistung ist oder wird soweit reduziert, dass ein Empfang des zweiten Identifizierungssignals 114 nur innerhalb des gleichen Raumes möglich ist, in dem das Haushaltgerät 110 angeordnet ist. Somit kann die Sprachsteuerungseinheit 120 das zweite Identifizierungssignal 114 nur dann empfangen, wenn sich das Haushaltgerät 110 und die Sprachsteuerungseinheit 120 beispielsweise im gleichen Zimmer befinden.

Danach melden die Sprachsteuerungseinheit 120 das zweite Identifizierungssignal 114 und das Haushaltgerät 110 das identische erste Identifizierungssignal 112 an die Verwaltungseinheit 130 bzw. an einen Server im Internet 160. Bei Übereinstimmung der Identifizierungssignale 112 und 114 übermittelt die Verwaltungseinheit 130, beispielsweise über einen sicheren Kanal, einen zufälligen Schlüssel an die Sprachsteuerungseinheit 120 als erstes Schlüsselsignal 132 und an das Haushaltgerät 110 als zweites Schlüsselsignal 134. Spricht der Kunde 140 nun einen Sprachbefehl, so wird dieser von der Sprachsteuerungseinheit 120 empfangen. Danach signiert die Sprachsteuerungseinheit 120 den Befehl mit dem Schlüssel und sendet die signierte Anfrage an das Haushaltgerät 110. Das Haushaltgerät 110 prüft die Signatur mit dem gleichen Schlüssel und führt bei Erfolg den Sprachbefehl aus.

Es wird beispielsweise eine standardmäßige WLAN-Funkkommunikation verwendet. Für die Signatur können beliebige symmetrische Signaturverfahren eingesetzt werden, wie zum Beispiel HMAC-SHA-1 (HMAC = Keyed-Hash Message Authentication Code; SHA = Secure Hash Algorithm), HMAC-SHA-256, etc. Zusätzlich kann das Verfahren 200 auch mit asymmetrischen Methoden, wie zum Beispiel RSA (Rivest, Shamir und Adleman), genutzt werden.

Ein Ablauf der Sprachsteuerung ist beispielsweise folgendermaßen. In einem ersten Teil des Ablaufs schaltet der Kunde 140 das Haushaltgerät 110 ein. In einem zweiten Teil des Ablaufs generiert das Haushaltgerät 110 ein Identifikationssignal als eine zufällige oder pseudozufällige Zahlenfolge und verschickt dieses in einem WLAN-Paket mit reduzierter Sendeleistung als zweites Identifikationssignal 114. Hierbei wird beispielsweise ein reines Layer-2-Paket genutzt, kein IP. Dieses zweite Identifikationssignal 114 wird von der Sprachsteuerungseinheit 120 empfangen, wenn dieselbe in dem gleichen Zimmer wie das Haushaltgerät 110 angeordnet ist. Dies wird physikalisch durch die reduzierte Sendeleistung ermöglicht. In einem dritten Teil des Ablaufs schickt das Haushaltgerät 110 das erste Identifikationssignal 112 über einen gesicherten Kanal über das Internet 160 an die Verwaltungseinheit 130 bzw. an einen Server. Der Kanal wird beispielsweise über TLS 1.2 (Transport Layer Security 1.2) abgesichert. Die Verwaltungseinheit 130 prüft die Identität des Haushaltgeräts 110 und speichert das erste Identifikationssignal 112 zwischen. In einem vierten Teil des Ablaufs schickt die Sprachsteuerungseinheit 120 ebenfalls das empfangene zweite Identifikationssignal 114 über das Internet 160 an die Verwaltungseinheit 130. Auch hier ist der Kanal abgesichert und die Verwaltungseinheit 130 prüft die Identität der Sprachsteuerungseinheit 120 bzw. authentifiziert diese. Danach prüft die Verwaltungseinheit 130 eine Berechtigung, beispielsweise ob die Sprachsteuerungseinheit 120 und das Haushaltgerät 110 dem gleichen Kunden 140 gehören, und generiert bei Erfolg einen zufälligen oder pseudozufälligen Schlüssel. In einem fünften Teil des Ablaufs wird der zufällige oder pseudozufällige Schlüssel als Schlüsselsignale 132 und 134 über sichere Kanäle an das Haushaltgerät 110 und die Sprachsteuerungseinheit 120 übertragen. Damit verfügen die Sprachsteuerungseinheit 120 und das Haushaltgerät 110 über ein gemeinsames Geheimnis, das niemals innerhalb des Kundennetzwerks übertragen wurde und somit gegenüber Angriffen innerhalb des Kundennetzwerkes geschützt ist. In einem sechsten Teil des Ablaufs spricht der Kunde 140 einen Sprachbefehl, der von der Sprachsteuerungseinheit 120 empfangen wird. In einem siebten Teil des Ablaufs signiert die Sprachsteuerungseinheit 120 den Befehl mit dem zuvor empfangenen Schlüssel und schickt diesen an das Haushaltgerät 110. Aufgrund der Eigenschaften digitaler Signaturverfahren, z. B. unumkehrbare Operationen, kann der Befehl im Klartext bzw. mit minimaler Sicherheit übertragen werden. Das Haushaltgerät 110 prüft die Signatur mit dem bekannten Schlüssel und führt bei Erfolg den Befehl aus. Ist die Signaturprüfung nicht erfolgreich, so wird der Befehl verworfen.

Das Verfahren 200 bzw. der vorstehend genannte Ablauf ist mehrstufig, sodass zunächst durch lokalen Austausch einer zufälligen oder pseudozufälligen Zahlenfolge oder Zeichenfolge mit reduzierter Sendeleistung eine räumliche Nähe physikalisch sichergestellt ist. Dieser Austausch erfolgt erst nach einer Bedienung des Haushaltgeräts 110 durch Einschalten durch den Kunden 140. Somit lässt sich auch sicherstellen, dass sich der Kunde 140 in der Nähe des Haushaltgeräts 110 befindet, da er Haushaltgerät 110 einschalten bzw. vor Ort bedienen soll. Danach kommunizieren die Sprachsteuerungseinheit 120 und das Haushaltgerät 110 mit der Verwaltungseinheit 130. Der Verwaltungseinheit 130 vertrauen die Sprachsteuerungseinheit 120 und das Haushaltgerät 110, z. B. über Zertifikate abgesichert, und erhalten von derselben über unabhängige, sichere und verschlüsselte Kanäle einen Schlüssel. Dieser Schlüssel wird niemals im Heimnetzwerk übertragen. Danach werden Befehle mit diesem Schlüssel signiert. Zusätzlich können signierte Befehle nur innerhalb des Heimnetzwerkes ausgetauscht werden und werden vom Haushaltgerät 110 auch nur über die Sprachsteuerungseinheit 120 bzw. eine Schnittstelle im Heimbereich entgegengenommen. Die Signatur sichert zudem die Unverfälschbarkeit der Befehle, sodass eine Manipulation derselben durch Angreifer innerhalb des Heimnetzes vermieden werden kann. Dadurch kann ein Vollzugriff auf alle Gerätefunktionen über eine allgemeine Vernetzungsschnittstelle, da eine lokale Nähe des Nutzers 140 zu dem Haushaltgerät 110 durch die mehrstufigen Mechanismen des Verfahrens 200 gesichert ist. Somit kann eine Bedienung am Haushaltgerät 110 und eine Bedienung über die Sprachsteuerungseinheit 120 einander gleichen.

Insbesondere kann zum Senden des zweiten Identifikationssignals 114 eine Sendeleistung so minimiert werden, dass das zweite Identifikationssignal 114 nicht durch eine Wand bzw. eine größere Strecke hindurch übertragen werden kann. Damit kann sichergestellt werden, dass sich die Sprachsteuerungseinheit 120 und das Haushaltgerät 110 im gleichen Zimmer befinden. Zusätzlich können die Sprachsteuerungseinheit 120 und das Haushaltgerät 110 ausgebildet sein, um eine Empfangsleistung eines WLAN-Zugriffspunkts bzw. WLAN-Access-Points auszuwerten. Hierfür sind beide am gleichen WLAN-Zugriffspunkt angemeldet (alles andere ist nicht zulässig). Ist ein Unterschied der Empfangsleistung größer als ein maximal zulässiger Wert, wird davon ausgegangen, dass sich die Sprachsteuerungseinheit 120 und das Haushaltgerät 110 nicht in räumlicher Nähe befinden. Aufgrund der Tatsache, dass ein WLAN Signal üblicherweise eine Bandbreite von zumindest 20 MHz aufweist, kommen hierbei auch Effekte einer Mehrwegeausbreitung nicht zum Tragen (die zugehörige Kohärenzbandbreite beträgt lediglich 6 MHz) und somit kann eine Anpassung durchgeführt werden. Die Auswertung könnte unter Verwendung der Verwaltungseinheit 130 erfolgen oder dezentral. Zum Senden des zweiten Identifikationssignals 114 wird ein einfaches Layer 2 Paket genutzt, das auch nicht zum Zugriffspunkt geschickt wird. Es wird auch nicht die BSSID des Zugriffspunktes gesetzt. Ein Repeater beispielsweise würde nur Pakete eines bestimmten Netzwerkes weiterleiten, gekennzeichnet durch eine eindeutige BSSID. Dadurch, dass für das zweite Identifikationssignal 114 eine andere BSSID verwendet wird, würde ein Repeater dasselbe nicht weiterleiten.

## Patentansprüche

1. Verfahren (200) zum Betreiben eines Sprachsteuerungssystems (100) für eine authentifizierte Sprachsteuerung, wobei das Sprachsteuerungssystem (100) zumindest ein Haushaltgerät (110), eine Sprachsteuerungseinheit (120) mit einem Mikrofon zum Erfassen eines akustisch übertragenen Sprachbefehls zum Durchführen der Sprachsteuerung des zumindest einen Haushaltgerätes (110) und eine Verwaltungseinheit (130) aufweist, wobei das zumindest eine Haushaltgerät (110), die Sprachsteuerungseinheit (120) und die Verwaltungseinheit (130) signalübertragungsfähig miteinander gekoppelt sind, wobei die Sprachsteuerungseinheit (120) über ein drahtloses lokales Netzwerk signalübertragungsfähig mit dem Haushaltgerät (110) gekoppelt ist und die Verwaltungseinheit (130) über das Internet (160) signalübertragungsfähig mit dem zumindest einem Haushaltgerät (110) und der Sprachsteuerungseinheit (120) gekoppelt ist, wobei das Verfahren (200) folgende Schritte aufweist:
Generieren (202) eines Identifikationssignals, das eine zufällige Zeichenfolge repräsentiert durch das zumindest eine Haushaltgerät (110), ansprechend auf die Ausführung einer Funktion durch Betätigung einer lokalen Bedienaktion (142) am zumindest einen J Z Haushaltsgerät (110);
Senden (204) des Identifikationssignals von dem zumindest einem Haushaltgerät (110) als erstes Identifikationssignal (112) mit einer ersten Sendeeigenschaft an die Verwaltungseinheit (130) und als zweites Identifikationssignal (114) mit einer von der ersten Sendeeigenschaft unterschiedlichen, zweiten Sendeeigenschaft an die Sprachsteuerungseinheit (120);
Empfangen (206) des zweiten Identifikationssignals (114) von dem zumindest einem Haushaltgerät (110) durch die Sprachsteuerungseinheit (120);
Weiterleiten (208) des zweiten Identifikationssignals (114) von der Sprachsteuerungseinheit (120) an die Verwaltungseinheit (130);
Einlesen (210) des ersten Identifikationssignals (112) von dem zumindest einem Haushaltgerät (110) und des zweiten Identifikationssignals (114) von der Sprachsteuerungseinheit (120) durch die Verwaltungseinheit (130);
Überprüfen (212) des ersten Identifikationssignals (112) und des zweiten Identifikationssignals (114) auf Übereinstimmung durch die Verwaltungseinheit (130);
Ausgeben (214) eines Schlüsselsignals, das einen digitalen Schlüssel für Sprachsteuerungsbefehle der Sprachsteuerungseinheit (120) an das zumindest eine Z Haushaltgerät (110)
repräsentiert, abhängig von der Übereinstimmung von der Verwaltungseinheit (130) als ein erstes Schlüsselsignal (132) an die Sprachsteuerungseinheit (120) und als ein zweites Schlüsselsignal (134) an das zumindest eine Haushaltgerät (110), wobei das erste Schlüsselsignal (132) und das zweite Schlüsselsignal (134) über sichere Kanäle ausgegeben werden;
Speichern (218) des von der Verwaltungseinheit (130) ausgegebenen ersten Schlüsselsignals (132) in der Sprachsteuerungseinheit (120);
Sichern (216) des von der Verwaltungseinheit (130) ausgegebenen zweiten Schlüsselsignals (134) in dem zumindest einem Haushaltgerät (110);
Erzeugen (220) eines Befehlssignals (122) mit einer Signatur unter Verwendung des digitalen Schlüssels des ersten Schlüsselsignals (132) ansprechend auf einen erkannten Sprachbefehl (144) durch die Sprachsteuerungseinheit (120), wobei das Befehlssignal (122) den Sprachbefehl repräsentiert;
Übertragen (222) des Befehlssignals (122) von der Sprachsteuerungseinheit (120) an das zumindest eine Z Haushaltgerät (110);
Aufnehmen (224) des Befehlssignals (122) von der Sprachsteuerungseinheit (120) durch das zumindest eine Z Haushaltgerät (110); und
Bereitstellen (226) eines Ansteuersignals zum Ausführen des Sprachbefehls des Befehlssignals (122) abhängig von einer Prüfung der Signatur des Befehlssignals (122) unter Verwendung des digitalen Schlüssels des zweiten Schlüsselsignals (134) durch das zumindest eine Z Haushaltgerät (110);
wobei die Schritte des Erzeugens (220), Übertragens (222), Aufnehmen (224) und Bereitstellen (226) ansprechend auf einen akustisch übertragenen Sprachbefehl eines Nutzers ausgeführt werden.

2. Verfahren (200) gemäß Anspruch 1, bei dem im Schritt (204) des Sendens die erste Sendeeigenschaft eine erste Sendeleistung und die zweite Sendeeigenschaft eine zweite Sendeleistung repräsentiert, wobei die zweite Sendeleistung geringer ist als die erste Sendeleistung ist.

3. Verfahren (200) gemäß Anspruch 1, bei dem die erste Sendeleistung groß genug ist, um dem ersten Identifikationssignal (112) ein Durchdringen einer Hauswand zu ermöglichen und bei dem die zweite Sendeleistung klein genug ist, um das zweite Identifikationssignal (114) an dem Durchdringen der Hauswand zu hindern.

4. Verfahren (200) gemäß einem der vorangegangenen Ansprüche, bei dem der Schritt (204) des Sendens in Abhängigkeit von einem Messwert durchgeführt wird, der einen Vergleich einer Empfangsleistung eines Zugriffspunktes eines Drahtlosnetzwerks durch das zumindest eine Haushaltgerät (110) und durch die Sprachsteuerungseinheit (120) repräsentiert, wobei das zumindest eine Haushaltgerät (110) und die Sprachsteuerungseinheit (120) an dem Zugriffspunkt angemeldet sind.

5. Verfahren (200) gemäß einem der vorangegangenen Ansprüche, bei dem die zweite Sendeeigenschaft das Senden (204) des zweiten Identifikationssignals (114) in der Schicht 1 oder 2 gemäß dem Open Systems Interconnection Model für Netzwerkprotokolle bewirkt.

6. Verfahren (200) gemäß einem der vorangegangenen Ansprüche, bei dem die erste Sendeeigenschaft das Senden (204) des ersten Identifikationssignals (112) mit einer ersten Basic Service Set Identification bewirkt, die einem Zugriffspunkt zugeordnet ist, an dem das zumindest eine Haushaltgerät (110) und die Sprachsteuerungseinheit (120) angemeldet sind, und bei dem die zweite Sendeeigenschaft das Senden (204) des zweiten Identifikationssignals (114) mit einer zweiten Basic Service Set Identification bewirkt, die sich von der ersten Basic Service Set Identification unterscheidet.

7. Verfahren (200) gemäß einem der vorangegangenen Ansprüche, bei dem im Schritt (204) des Sendens das erste Identifikationssignal (112) über einen sicheren Kanal gesendet wird, wobei im Schritt (208) des Weiterleitens das zweite Identifikationssignal (114) über einen sicheren Kanal weitergeleitet wird, wobei ein sicherer Kanal eine Signalübermittlung in Schicht 5 oder höher gemäß dem Open Systems Interconnection Model für Netzwerkprotokolle repräsentiert, insbesondere mittels Transport Layer Security 1.2.

8. Verfahren (200) gemäß einem der vorangegangenen Ansprüche, bei dem im Schritt (212) des Überprüfens die Identität des zumindest einen Haushaltgerätes (110) und/oder der Sprachsteuerungseinheit (120) unter Verwendung des ersten Identifikationssignals (112) und/oder des zweiten Identifikationssignals (114) durch die Verwaltungseinheit (130) überprüft wird.

9. Haushaltgerät (110) für ein Sprachsteuerungssystem (100), wobei das Sprachsteuerungssystem (100) zumindest das Haushaltgerät (110), eine Sprachsteuerungseinheit (120) mit einem Mikrofon zum Erfassen eines akustisch übertragenen Sprachbefehls zum Durchführen der Sprachsteuerung des Haushaltgerätes (110) und eine Verwaltungseinheit (130) aufweist, wobei das Haushaltgerät (110), die Sprachsteuerungseinheit (120) und die Verwaltungseinheit (130) signalübertragungsfähig miteinander koppelbar oder gekoppelt sind, wobei das Haushaltsgerät (110) über ein drahtloses lokales Netzwerk signalübertragungsfähig mit der Sprachsteuerungseinheit (120) gekoppelt ist und das Haushaltsgerät (110) über das Internet (160) signalübertragungsfähig mit der Verwaltungseinheit(130) gekoppelt ist, wobei das Haushaltgerät (110) ausgebildet ist, um den Schritt (202) des Generierens, den Schritt (204) des Sendens, den Schritt (216) des Sicherns, den Schritt (224) des Aufnehmens und den Schritt (226) des Bereitstellens des Verfahrens (200) zum Betreiben gemäß einem der Ansprüche 1 bis 8 auszuführen.

10. Sprachsteuerungseinheit (120) für ein Sprachsteuerungssystem (100), wobei das Sprachsteuerungssystem (100) zumindest ein Haushaltgerät (110), die Sprachsteuerungseinheit (120) mit einem Mikrofon zum Erfassen eines akustisch übertragenen Sprachbefehls zum Durchführen der Sprachsteuerung des zumindest einen Haushaltgerätes (110) und eine Verwaltungseinheit (130) aufweist, wobei das zumindest eine Haushaltgerät (110), die Sprachsteuerungseinheit (120) und die Verwaltungseinheit (130) signalübertragungsfähig miteinander koppelbar oder gekoppelt sind, wobei die Sprachsteuerungseinheit (120) über ein drahtloses lokales Netzwerk signalübertragungsfähig mit dem zumindest einem Haushaltgerät (110) gekoppelt ist und die Sprachsteuerungseinheit (120) über das Internet (160) signalübertragungsfähig mit der Verwaltungseinheit (130) gekoppelt ist, wobei die Sprachsteuerungseinheit (120) ausgebildet ist, um den Schritt (206) des Empfangens, den Schritt (208) des Weiterleitens, den Schritt (218) des Speicherns, den Schritt (220) des Erzeugens und den Schritt (222) des Übertragens des Verfahrens (200) zum Betreiben gemäß einem der Ansprüche 1 bis 8 auszuführen.

11. Verwaltungseinheit (130) für ein Sprachsteuerungssystem (100), wobei das Sprachsteuerungssystem (100) zumindest ein Haushaltgerät (110), eine Sprachsteuerungseinheit (120) mit einem Mikrofon zum Erfassen eines akustisch übertragenen Sprachbefehls zum Durchführen der Sprachsteuerung des zumindest einen Haushaltgerätes (110) und die Verwaltungseinheit (130) aufweist, wobei das zumindest eine Haushaltgerät (110), die Sprachsteuerungseinheit (120) und die Verwaltungseinheit (130) signalübertragungsfähig miteinander koppelbar oder gekoppelt sind, wobei die Sprachsteuerungseinheit (120) über ein drahtloses lokales Netzwerk signalübertragungsfähig mit dem zumindest einem Haushaltgerät (110) gekoppelt ist und die Verwaltungseinheit (130) über das Internet (160) signalübertragungsfähig mit dem zumindest einem Haushaltgerät (110) und der Sprachsteuerungseinheit (120) gekoppelt ist, wobei die Verwaltungseinheit (130) ausgebildet ist, um den Schritt (210) des Einlesens, den Schritt (212) des Überprüfens und den Schritt (214) des Ausgebens des Verfahrens (200) zum Betreiben gemäß einem der Ansprüche 1 bis 8 auszuführen.

12. Sprachsteuerungssystem (100) für eine authentifizierte Sprachsteuerung, wobei das Sprachsteuerungssystem (100) folgende Merkmale aufweist:
zumindest ein Haushaltgerät (110) gemäß Anspruch 9;
eine Sprachsteuerungseinheit (120) gemäß Anspruch 10, wobei die Sprachsteuerungseinheit (120) ausgebildet ist, um die Sprachsteuerung des zumindest einen Haushaltgerätes (110) durchzuführen; und
eine Verwaltungseinheit (130) gemäß Anspruch 11, wobei das zumindest eine Haushaltgerät (110), die Sprachsteuerungseinheit (120) und die Verwaltungseinheit (130) signalübertragungsfähig miteinander koppelbar oder gekoppelt sind, wobei die Sprachsteuerungseinheit (120) über ein drahtloses lokales Netzwerk signalübertragungsfähig mit dem zumindest einem Haushaltgerät (110) gekoppelt ist und die Verwaltungseinheit (130) über das Internet (160) signalübertragungsfähig mit dem zumindest einem Haushaltgerät (110) und der Sprachsteuerungseinheit (120) gekoppelt ist, wobei das Sprachsteuerungssystem ausgebildet ist, die Schritte des Verfahren (200) zum Betreiben gemäß einem der Ansprüche 1 bis 8 auszuführen.

## Claims

1. Method (200) for operating a voice control system (100) for authenticated voice control, the voice control system (100) comprising at least one household appliance (110), a voice control unit (120) having a microphone for detecting an acoustically transmitted voice command for performing the voice control of the at least one household appliance (110), and a management unit (130), the at least one household appliance (110), the voice control unit (120) and the management unit (130) being coupled to one another for signal transmission, the voice control unit (120) being coupled to the household appliance (110) via a wireless local network for signal transmission and the management unit (130) being coupled to the at least one household appliance (110) and the voice control unit (120) via the Internet (160) for signal transmission, wherein the method (200) comprises the following steps:
generation (202) of an identification signal representing a random character string by the at least one household appliance (110) in response to the execution of a function by actuation of a local operating action (142) on the at least one household appliance (110);
sending (204) of the identification signal, from the at least one household appliance (110), as a first identification signal (112) having a first sending characteristic to the management unit (130), and as a second identification signal (114) having a second sending characteristic different from the first sending characteristic to the voice control unit (120);
receipt (206) of the second identification signal (114) from the at least one household appliance (110) by the voice control unit (120);
forwarding (208) of the second identification signal (114) from the voice control unit (120) to the management unit (130);
reading in (210) of the first identification signal (112) from the at least one household appliance (110) and the second identification signal (114) from the voice control unit (120) by the management unit (130);
checking (212) of the first identification signal (112) and the second identification signal (114) for a match by the management unit (130);
output (214) of a key signal which represents a digital key for voice control commands from the voice control unit (120) to the at least one household appliance (110), depending on the match from the management unit (130), as a first key signal (132) to the voice control unit (120) and as a second key signal (134) to the at least one household appliance (110), the first key signal (132) and the second key signal (134) being output via secure channels;
storage (218) of the first key signal (132) output by the management unit (130) in the voice control unit (120);
securing (216) of the second key signal (134) output by the management unit (130) in the at least one household appliance (110);
generation (220) of a command signal (122) having a signature using the digital key of the first key signal (132) in response to a recognized voice command (144) by the voice control unit (120), the command signal (122) representing the voice command;
transmission (222) of the command signal (122) from the voice control unit (120) to the at least one household appliance (110);
acquisition (224) of the command signal (122) from the voice control unit (120) by the at least one household appliance (110); and
provision (226) of a drive signal for executing the voice command of the command signal (122) depending on a check of the signature of the command signal (122) using the digital key of the second key signal (134) by the at least one household appliance (110);
wherein the generation (220), transmission (222), acquisition (224) and provision (226) steps are executed in response to an acoustically transmitted voice command from a user.

2. Method (200) according to claim 1, wherein, in the step (204) of sending, the first sending characteristic represents a first sending power and the second sending characteristic represents a second sending power, the second sending power being lower than the first sending power.

3. Method (200) according to claim 1, wherein the first sending power is large enough to allow the first identification signal (112) to penetrate a house wall and wherein the second sending power is small enough to prevent the second identification signal (114) from penetrating the house wall.

4. Method (200) according to any of the preceding claims, wherein the step (204) of sending is performed on the basis of a measured value which represents a comparison of a reception power of an access point of a wireless network by the at least one household appliance (110) and by the voice control unit (120), the at least one household appliance (110) and the voice control unit (120) being registered at the access point.

5. Method (200) according to any of the preceding claims, wherein the second sending characteristic causes the sending (204) of the second identification signal (114) in layer 1 or 2 according to the Open Systems Interconnection Model for network protocols.

6. Method (200) according to any of the preceding claims, wherein the first sending characteristic causes the sending (204) of the first identification signal (112) with a first Basic Service Set Identification, which is assigned to an access point at which the at least one household appliance (110) and the voice control unit (120) are registered, and wherein the second sending characteristic causes the sending (204) of the second identification signal (114) with a second Basic Service Set Identification which differs from the first Basic Service Set Identification.

7. Method (200) according to any of the preceding claims, wherein, in the step (204) of sending, the first identification signal (112) is sent via a secure channel, and in the step (208) of forwarding the second identification signal (114) is forwarded via a secure channel, a secure channel representing a signal transmission in layer 5 or higher according to the Open Systems Interconnection Model for network protocols, in particular by means of Transport Layer Security 1.2.

8. Method (200) according to any of the preceding claims, wherein, in the step (212) of checking, the identity of the at least one household appliance (110) and/or the voice control unit (120) is checked by the management unit (130) using the first identification signal (112) and/or the second identification signal (114).

9. Household appliance (110) for a voice control system (100), the voice control system (100) comprising at least the household appliance (110), a voice control unit (120) having a microphone for detecting an acoustically transmitted voice command for performing the voice control of the household appliance (110), and a management unit (130), the household appliance (110), the voice control unit (120) and the management unit (130) being able to be or being coupled to one another for signal transmission, the household appliance (110) being coupled to the voice control unit (120) via a wireless local network for signal transmission and the household appliance (110) being coupled to the management unit (130) via the Internet (160) for signal transmission, the household appliance (110) being designed to execute the step (202) of generation, the step (204) of sending, the step (216) of securing, the step (224) of acquisition and the step (226) of provision of the operating method (200) according to any of claims 1 to 8.

10. Voice control unit (120) for a voice control system (100), the voice control system (100) comprising at least one household appliance (110), the voice control unit (120) having a microphone for detecting an acoustically transmitted voice command for performing the voice control of the at least one household appliance (110), and a management unit (130), the at least one household appliance (110), the voice control unit (120) and the management unit (130) being able to be or being coupled to one another for signal transmission, the voice control unit (120) being coupled to the at least one household appliance (110) via a wireless local network for signal transmission and the voice control unit (120) being coupled to the management unit (130) via the Internet (160) for signal transmission, the voice control unit (120) being designed to execute the step (206) of receipt, the step (208) of forwarding, the step (218) of storage, the step (220) of generation and the step (222) of transmission of the operating method (200) according to any of claims 1 to 8.

11. Management unit (130) for a voice control system (100), the voice control system (100) comprising at least one household appliance (110), a voice control unit (120) having a microphone for detecting an acoustically transmitted voice command for performing the voice control of the at least one household appliance (110), and the management unit (130), the at least one household appliance (110), the voice control unit (120) and the management unit (130) being able to be or being coupled to one another for signal transmission, the voice control unit (120) being coupled to the at least one household appliance (110) via a wireless local network for signal transmission and the management unit (130) being coupled to the at least one household appliance (110) and the voice control unit (120) via the Internet (160) for signal transmission, the management unit (130) being designed to execute the step (210) of reading in, the step (212) of checking and the step (214) of output of the operating method (200) according to any of claims 1 to 8.

12. Voice control system (100) for authenticated voice control, wherein the voice control system (100) comprises the following features:
at least one household appliance (110) according to claim 9;
a voice control unit (120) according to claim 10, the voice control unit (120) being designed to perform the voice control of the at least one household appliance (110); and
a management unit (130) according to claim 11, the at least one household appliance (110), the voice control unit (120) and the management unit (130) being able to be or being coupled to one another for signal transmission, the voice control unit (120) being coupled to the at least one household appliance (110) via a wireless local network for signal transmission and the management unit (130) being coupled to the at least one household appliance (110) and the voice control unit (120) via the Internet (160) for signal transmission, the voice control system being designed to execute the steps of the operating method (200) according to any of claims 1 to 8.

## Revendications

1. Procédé (200) pour faire fonctionner un système de commande vocale (100) pour une commande vocale authentifiée, le système de commande vocale (100) comportant au moins un appareil électroménager (110), une unité de commande vocale (120) pourvue d'un microphone destiné à détecter une instruction vocale transmise acoustiquement, laquelle instruction vocale permet l'exécution de la commande vocale de l'au moins un appareil électroménager (110), le système de commande vocale comprenant en outre une unité de gestion (130), l'au moins un appareil électroménager (110), l'unité de commande vocale (120) et l'unité de gestion (130) étant couplés l'un à l'autre d'une manière permettant la transmission de signaux, l'unité de commande vocale (120) étant couplée, d'une manière permettant la transmission de signaux, à l'appareil électroménager (110) par l'intermédiaire d'un réseau local sans fil et l'unité de gestion (130) étant couplée, d'une manière permettant la transmission de signaux, à l'au moins un appareil électroménager (110) et à l'unité de commande vocale (120) par l'intermédiaire d'Internet (160), le procédé (200) comprenant les étapes suivantes :
génération (202), par l'au moins un appareil électroménager (110), d'un signal d'identification représentant une chaîne de caractères aléatoires, en réponse à l'exécution d'une fonction en actionnant une action de commande (142) locale sur l'au moins un appareil électroménager (110) ;
envoi (204), à l'unité de gestion (130), du signal d'identification depuis l'au moins un appareil électroménager (110) en tant que premier signal d'identification (112) ayant une première propriété de transmission, et, à l'unité de commande vocale (120), du signal d'identification depuis l'au moins un appareil électroménager en tant que second signal d'identification (114) ayant une seconde propriété de transmission qui diffère de la première propriété de transmission ;
réception (206), par l'unité de commande vocale (120), du second signal d'identification (114) provenant de l'au moins un appareil électroménager (110) ;
transfert (208) du second signal d'identification (114) de l'unité de commande vocale (120) à l'unité de gestion (130) ;
lecture (210), par l'unité de gestion (130), du premier signal d'identification (112) provenant de l'au moins un appareil électroménager (110) et du second signal d'identification (114) provenant de l'unité de commande vocale (120) ;
vérification (212), par l'unité de gestion (130), de la correspondance entre le premier signal d'identification (112) et le second signal d'identification (114) ;
émission (214) d'un signal de clé, qui représente une clé numérique pour les instructions de commande vocale de l'unité de commande vocale (120) à l'au moins un appareil électroménager (110), en fonction de la correspondance de l'unité de gestion (130), en tant que premier signal de clé (132), à l'unité de commande vocale (120), et en tant que second signal de clé (134), à l'au moins un appareil électroménager (110), le premier signal de clé (132) et le second signal de clé (134) étant émis par l'intermédiaire de canaux sécurisés ;
mémorisation (218), dans l'unité de commande vocale (120), du premier signal de clé (132) émis par l'unité de gestion (130) ;
sécurisation (216), dans l'au moins un appareil électroménager (110), du second signal de clé (134) émis par l'unité de gestion (130) ;
génération (220) d'un signal d'instruction (122) comportant une signature, en utilisant la clé numérique du premier signal de clé (132) en réponse à une instruction vocale (144) reconnue émise par l'unité de commande vocale (120), le signal d'instruction (122) représentant l'instruction vocale ;
transmission (222), à l'au moins un appareil électroménager (110), du signal d'instruction (122) provenant de l'unité de commande vocale (120) ;
enregistrement (224), par l'au moins un appareil électroménager (110), du signal d'instruction (122) provenant de l'unité de commande vocale (120) ; et
fourniture (226), par l'au moins un appareil électroménager (110), d'un signal de commande pour exécuter l'instruction vocale du signal d'instruction (122) en fonction d'une vérification de la signature du signal d'instruction (122) en utilisant la clé numérique du second signal de clé (134) ;
les étapes de génération (220), de transmission (222), d'enregistrement (224) et de fourniture (226) étant exécutées en réponse à une instruction vocale d'un utilisateur, laquelle est transmise acoustiquement.

2. Procédé (200) selon la revendication 1, dans lequel à l'étape (204) de transmission, la première propriété de transmission représente une première puissance de transmission et la seconde propriété de transmission représente une seconde puissance de transmission, la seconde puissance de transmission étant inférieure à la première puissance de transmission.

3. Procédé (200) selon la revendication 1, dans lequel la première puissance de transmission est suffisamment élevée pour permettre au premier signal d'identification (112) de traverser le mur d'une maison, et dans lequel la seconde puissance de transmission est suffisamment faible pour empêcher le second signal d'identification (114) de traverser le mur de la maison.

4. Procédé (200) selon l'une des revendications précédentes, dans lequel l'étape (204) de transmission est réalisée en fonction d'une valeur mesurée représentant une comparaison, par l'au moins un appareil électroménager (110) et par l'unité de commande vocale (120), d'une puissance de réception d'un point d'accès d'un réseau sans fil, l'au moins un appareil électroménager (110) et l'unité de commande vocale (120) étant connectés au point d'accès.

5. Procédé (200) selon l'une des revendications précédentes, dans lequel la seconde propriété de transmission induit la transmission (204) du second signal d'identification (114) dans la couche 1 ou 2 conformément au modèle d'interconnexion de systèmes ouverts pour protocoles de réseau.

6. Procédé (200) selon l'une des revendications précédentes, dans lequel la première propriété de transmission induit la transmission (204) du premier signal d'identification (112) comportant une première identification d'ensemble de services de base associée à un point d'accès auquel l'au moins un appareil électroménager (110) et l'unité de commande vocale (120) sont connectés, et dans lequel la seconde propriété de transmission induit la transmission (204) du second signal d'identification (114) comportant une seconde identification d'ensemble de services de base qui diffère de la première identification d'ensemble de services de base.

7. Procédé (200) selon l'une des revendications précédentes, dans lequel à l'étape (204) de transmission, le premier signal d'identification (112) est transmis par l'intermédiaire d'un canal sécurisé, le second signal d'identification (114) étant transféré par l'intermédiaire d'un canal sécurisé, à l'étape (208) de transfert, un canal sécurisé représentant une transmission de signal dans la couche 5 ou dans une couche supérieure conformément au modèle d'interconnexion de systèmes ouverts pour protocoles de réseau, le canal étant notamment sécurisé au moyen du protocole de sécurité de la couche transport 1.2.

8. Procédé (200) selon l'une des revendications précédentes, dans lequel à l'étape (212) de vérification, l'identité de l'au moins un appareil électroménager (110) et/ou de l'unité de commande vocale (120) est vérifiée par l'unité de gestion (130) en utilisant le premier signal d'identification (112) et/ou le second signal d'identification (114).

9. Appareil électroménager (110) pour un système de commande vocale (100), le système de commande vocale (100) comportant au moins l'appareil électroménager (110), une unité de commande vocale (120) pourvue d'un microphone destiné à détecter une instruction vocale transmise acoustiquement, laquelle instruction vocale permet l'exécution de la commande vocale de l'appareil électroménager (110), le système de commande vocale comprenant en outre une unité de gestion (130), l'appareil électroménager (110), l'unité de commande vocale (120) et l'unité de gestion (130) pouvant être couplés ou étant couplés l'un à l'autre d'une manière permettant la transmission de signaux, l'appareil électroménager (110) étant couplé, d'une manière permettant la transmission de signaux, à l'unité de commande vocale (120) par l'intermédiaire d'un réseau local sans fil et l'appareil électroménager (110) étant couplé, d'une manière permettant la transmission de signaux, à l'unité de gestion (130) par l'intermédiaire d'Internet (160), l'appareil électroménager (110) étant conçu pour exécuter l'étape (202) de génération, l'étape (204) de transmission, l'étape (216) de sécurisation, l'étape (224) d'enregistrement et l'étape (226) de fourniture du procédé (200) pour le fonctionnement selon l'une des revendications 1 à 8.

10. Unité de commande vocale (120) pour un système de commande vocale (100), le système de commande vocale (100) comportant au moins un appareil électroménager (110), l'unité de commande vocale (120) pourvue d'un microphone destiné à détecter une instruction vocale transmise acoustiquement, laquelle instruction vocale permet l'exécution de la commande vocale de l'au moins appareil électroménager (110), le système de commande vocale comprenant en outre une unité de gestion (130), l'au moins un appareil électroménager (110), l'unité de commande vocale (120) et l'unité de gestion (130) pouvant être couplés ou étant couplés l'un à l'autre d'une manière permettant la transmission de signaux, l'unité de commande vocale (120) étant couplée, d'une manière permettant la transmission de signaux, à l'au moins un appareil électroménager (110) par l'intermédiaire d'un réseau local sans fil et l'unité de commande vocale (120) étant couplée, d'une manière permettant la transmission de signaux, à l'unité de gestion (130) par l'intermédiaire d'Internet (160), l'unité de commande vocale (120) étant conçue pour exécuter l'étape (206) de réception, l'étape (208) de transfert, l'étape (218) de mémorisation, l'étape (220) de génération et l'étape (222) de transmission du procédé (200) pour le fonctionnement selon l'une des revendications 1 à 8.

11. Unité de gestion (130) pour un système de commande vocale (100), le système de commande vocale (100) comportant au moins un appareil électroménager (110), une unité de commande vocale (120) pourvue d'un microphone destiné à détecter une instruction vocale transmise acoustiquement, laquelle instruction vocale permet l'exécution de la commande vocale de l'au moins appareil électroménager (110), le système de commande vocale comprenant en outre l'unité de gestion (130), l'au moins un appareil électroménager (110), l'unité de commande vocale (120) et l'unité de gestion (130) pouvant être couplés ou étant couplés l'un à l'autre d'une manière permettant la transmission de signaux, l'unité de commande vocale (120) étant couplée, d'une manière permettant la transmission de signaux, à l'au moins un appareil électroménager (110) par l'intermédiaire d'un réseau local sans fil et l'unité de gestion (130) étant couplée, d'une manière permettant la transmission de signaux, à l'au moins un appareil électroménager (110) et à l'unité de commande vocale (120) par l'intermédiaire d'Internet (160), l'unité de gestion (130) étant conçue pour exécuter l'étape (210) de lecture, l'étape (212) de vérification et l'étape (214) d'émission du procédé (200) pour le fonctionnement selon l'une des revendications 1 à 8.

12. Système de commande vocale (100) pour une commande vocale authentifiée, le système de commande vocale (100) présentant les caractéristiques suivantes :
au moins un appareil électroménager (110) selon la revendication 9 ;
une unité de commande vocale (120) selon la revendication 10, l'unité de commande vocale (120) étant conçue pour exécuter la commande vocale de l'au moins un appareil électroménager (110) ; et
une unité de gestion (130) selon la revendication 11, l'au moins un appareil électroménager (110), l'unité de commande vocale (120) et l'unité de gestion (130) pouvant être couplés ou étant couplés l'un à l'autre d'une manière permettant la transmission de signaux, l'unité de commande vocale (120) étant couplée, d'une manière permettant la transmission de signaux, à l'au moins un appareil électroménager (110) par l'intermédiaire d'un réseau local sans fil et l'unité de gestion (130) étant couplée, d'une manière permettant la transmission de signaux, à l'au moins un appareil électroménager (110) et à l'unité de commande vocale (120) par l'intermédiaire d'Internet (160), le système de commande vocale étant conçu pour exécuter les étapes du procédé (200) pour le fonctionnement selon l'une des revendications 1 à 8.
